Europäisches Patentamt

European Patent Office

Office européen des brevets

(19)

(11) **EP 1 613 072 A1**

(12) **EUROPEAN PATENT APPLICATION**

(43) Date of publication:
**04.01.2006 Bulletin 2006/01**

(51) Int Cl.:
*H04N 5/74* (2006.01)

(21) Application number: **05013863.5**

(22) Date of filing: **28.06.2005**

(84) Designated Contracting States:
**AT BE BG CH CY CZ DE DK EE ES FI FR GB GR
HU IE IS IT LI LT LU MC NL PL PT RO SE SI SK TR**
Designated Extension States:
**AL BA HR LV MK YU**

(30) Priority: **28.06.2004 US 583805 P**

(71) Applicant: **BARCO N.V.
8500 Kortrijk (BE)**

(72) Inventor: **Malfait, Koen
8553 Otegem (BE)**

(74) Representative: **Bird, Ariane et al
Bird Goën & Co
Klein Dalenstraat 42A
3020 Winksele (BE)**

(54) **Method and device for improving contrast in a projection system**

(57)    A projection system with improved contrast comprises a light source (4) for emitting a bundle of light, a spatial light modulator (54) for modulating light emitted from the light source, and aperture stop means (88) arranged between the light source and the modulating device for limiting the bundle of light to be incident on the spatial light modulator. The aperture stop means comprises an optical component making use of refraction and internal reflection, such as for example a prism. Such optical component can easily be used in environments subject to high temperatures, and in environments where the optical component has to withstand large amounts of infrared and ultraviolet radiation.

Fig. 8

EP 1 613 072 A1

**Description**

**Technical field of the invention**

The present invention relates to a method and a device for improving the contrast of a projection system.

**Background of the invention**

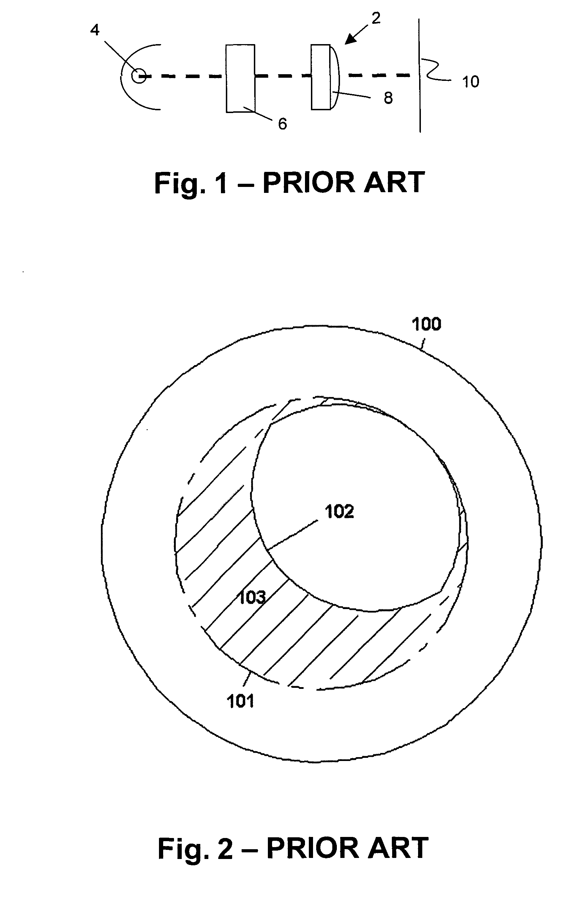

A typical projection device 2 is illustrated in Fig. 1 and comprises a light source 4, an image forming device 6 such as for example a liquid crystal display (LCD) panel or a spatial light modulator (SLM) unit such as a deformable mirror device (DMD), and a projection lens 8. Light emitted from the light source 4 follows a light path from the light source 4, usually passing through a number of optical components such as lenses and prisms, past the image forming device 6 and the projection lens 8, towards a display device 10 such as a projection screen, onto which an image is projected. The image forming device 6 may be transmissive or reflective; in Fig. 1 a transmissive image forming device is shown. The display device 10 may be a front projection display device or a rear projection display device.

In conventional projection devices, contrast is improved by placing a mechanical aperture stop in the projection system, thus removing light impinging under some angles. In general, a special 'aperture plane' exists in a projection apparatus, where the cross-section of the light bundle gives an exact perception of the angular distribution of the light. Every position at this cross-section corresponds with rays with a predetermined angle with respect to the optical axis. The central point in the aperture corresponds to rays which follow the optical axis (angle w.r.t. optical axis = 0). In Fig. 2, an arbitrary example of a mechanical aperture stop is shown. The intersection of a metal plate 100 with a light bundle corresponds to the disk-like spot 101. The aperture stop in this example is a cat-eye shaped off-axis hole 102. As a consequence, all light with angles which correspond to a position in the aperture plane which lies inside the hatched region 103 is obstructed an will not reach the display device 10 (not represented in Fig. 2).

It is a disadvantage of conventional mechanical aperture stops that they are to be positioned in the aperture plane, where lots of other optical elements are preferably placed as well.

**Summary of the invention**

It is an object of the present invention to provide improved contrast in a projection device

The above objective is accomplished by a method and device according to the present invention.
In one aspect, the present invention provides a projection system which comprises a light source for emitting a bundle of light, a spatial light modulator for modulating light emitted from the light source, and aperture stop means arranged between the light source and the modulating device for limiting the bundle of light to be incident on the spatial light modulator. According to the present invention, the aperture stop means comprises an optical component making use of refraction and internal reflection. The optical component may be a prism. It is an advantage of the present invention that the optical component making use of refraction and internal reflection can easily be used in environments subject to high temperatures, and in environments where the optical component has to withstand large amounts of infrared and ultraviolet radiation, such as for example in projection systems. The aperture stop means may be adapted for stopping a fraction of said bundle of light, said fraction having a predetermined angular distribution.

The optical component of the aperture stop means may be provided outside an aperture plane of the projection system, the aperture plane being determined by further optics of the projection system. The optical component of the aperture stop means may be provided substantially outside an aperture plane of the projection system, i.e. in an optical plane where the cross-section of the light bundle also comprises information about the spatial distribution of the light bundle in an image plane, in combination with information about the angular distribution of the light.

In a further aspect, the present invention provides a method for improving contrast of a projection device comprising a spatial light modulator. The method comprises emitting light from a light source and passing emitted light over a first light path so as to make it impinge on the spatial light modulator. According to the present invention, the method furthermore comprises, in the optical path between the light source and the spatial light modulator, splitting the emitted light by means of internal reflection and refraction in a first portion impinging on the spatial light modulator and a second portion not impinging on the spatial light modulator. Splitting the emitted light may comprise impinging the emitted light on a prism. The first portion impinging on the spatial light modulator may have a first angular distribution and the second portion not impinging on the spatial light modulator may have a second angular distribution, the first angular distribution and the second angular distribution being different. Splitting the emitted light may comprise splitting the light outside an aperture plane of optics present in the projection system. Splitting may be provided substantially outside an aperture plane of the projection system, i.e. in an optical plane where the cross-section of the light bundle also comprises information about the spatial distribution of the light bundle in an image plane, in combination with information about the angular distribution of the light.

These and other characteristics, features and advantages of the present invention will become apparent from the following detailed description, taken in conjunction with the accompanying drawings, which illustrate, by way of example, the principles of the invention. This description is given for the sake of example only, without limiting the scope of the invention. The reference figures quoted below refer to the attached drawings.

**Brief description of the drawings**

Fig. 1 is a schematic illustration of a conventional non-folded projection system.
Fig. 2 illustrates a prior art aperture stop.
Fig. 3 describes the known principle of total internal reflection.
Fig. 4 illustrates the use of total internal reflection in a prism.
Fig. 5 illustrates the prior art use of a TIR-prism in a single chip DLP-projector.
Figs. 6 and 7 illustrate the use of a prism for controlling the aperture filling of a system according to an embodiment of the present invention.
Fig. 8 is a schematic representation of a projection system according to an embodiment of the present invention.

In the different figures, the same reference signs refer to the same or analogous elements.

**Description of illustrative embodiments**

The present invention will be described with respect to particular embodiments and with reference to certain drawings but the invention is not limited thereto but only by the claims. The drawings described are only schematic and are non-limiting. In the drawings, the size of some of the elements may be exaggerated and not drawn on scale for illustrative purposes. The dimensions and the relative dimensions do not correspond to actual reductions to practice of the invention. The description of the present invention will refer to DMD's but the invention is not limited thereto. For instance, other reflective SLM's such as reflective LCD's are also included.

It is to be noticed that the term "comprising", used in the claims, should not be interpreted as being restricted to the means listed thereafter; it does not exclude other elements or steps. Thus, the scope of the expression "a device comprising means A and B" should not be limited to devices consisting only of components A and B. It means that with respect to the present invention, the only relevant components of the device are A and B.

The invention will now be described by a detailed description of an embodiment of the invention. It is clear that other embodiments of the invention can be configured according to the knowledge of persons skilled in the art without departing from the true spirit or technical teaching of the invention, the invention being limited only by the terms of the appended claims.

In projection systems, an optical device making use of the principle of total internal reflection may be used. This principle of total internal reflection is an immediate outcome of the general law of refraction, written down by Snelllius. The suffix i corresponds to the incoming light ray, whereas r stands for either reflection or refraction. The angles are measured with respect to the normal on the surface under examination. The symbol n on the other hand stands for the refractive index of the material in question.

$$n_i \cdot \sin(\theta_i) = n_r \cdot \sin(\theta_r)$$

It can easily be seen that reflection by a normal mirror, as is described above, is also described by this law. In that case, the refractive index $n_i$ of the medium where the light comes from is equal to the refractive index $n_r$ of the medium the light leaves to.

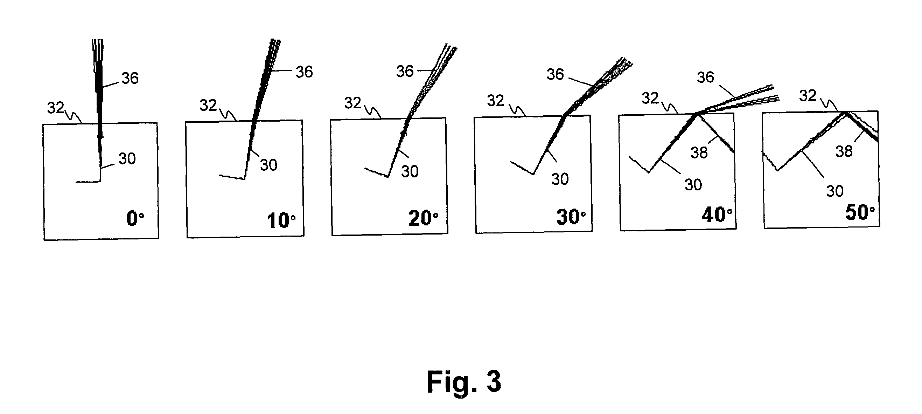

In Fig. 3, the principle of total internal reflection of an impinging light ray 30 leaving a piece of glass 32 (here for example chosen to be BK7, with a refractive index of ~1.52) towards free air (refractive index ~1.00) is illustrated. For angles below 40°, the impinging light rays 30 are refracted, but continue their way in air as a bundle 36 of light rays. However, as can be seen from the above formula, the angle $\theta_r$ with respect to the normal is much larger in air than it is in glass ($\theta_i$). This is an immediate result of the difference in refractive index between glass and air. At angles of approximately 40°, most of the light rays of the shown impinging bundle 30 (40±2°) enter the medium air, but this is no longer the case for all rays; a portion 38 of the light rays are internally reflected in the piece of glass 32. The angles of the refracted rays 36 are close to 90° with respect to the normal. For the bundle 30 hitting the surface at 50°, all rays are internally reflected as a bundle 38. The angle of total internal reflection, i.e. the minimum angle $\theta_i$ at which total internal reflection occurs, for this BK7-air transition can be calculated as follows:

$$1.52 \cdot \sin(\theta_{TIR}) = 1.00 \cdot \sin(90°) \quad \rightarrow \quad \theta_{TIR} = 41.13°$$

More in general, the minimum angle at which total internal reflection occurs can be determined as

$$sin(\theta_{TIR}) = \frac{n_r}{n_i}$$

This principle of internal reflection can be used to fold a beam of light, for example in a projection device. The angle of incidence of the light beam on the glass-air surface determines whether a particular light ray will obey the law of total internal reflection or not.

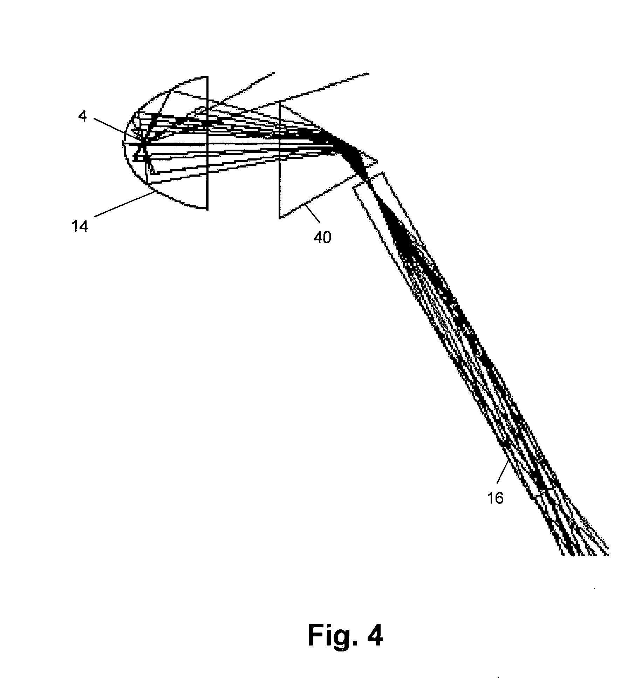

In Fig. 4, the possibility is demonstrated to couple all light from a lamp-reflector system 4, 14 into an integrating rod 16 using a prism 40. The prism 40 and the lamp reflector system 4, 14 are chosen and placed in the light path so that the prism is suitable for total internal reflection of the impinging light rays. Depending on the material used for the prism 40, and on the corresponding refractive indexes, different angles of impinging light rays will generate total internal reflection, i.e. depending on the material used for the prism 40, it can be placed in another position, and the light path can be folded more or less.

Using a prism as a folding mirror has the huge benefit that it is possible to use a glass with good thermal characteristics for this prism (e.g. fused silica). The prism can then resist the ultraviolet and infrared radiation from the light source as well as the temperatures that result from this radiation, which is not the case for most thin film coatings applied onto typical dichroic mirrors, which essentially are small glass plates without good heat sink characteristics. The surface where total internal reflection occurs is uncoated. The ultraviolet and infrared radiation can be removed further away from the lamp, where the light intensity is lower so that the filter can resist the thermal conditions.

According to an embodiment of the present invention, the prism 40 can also be used for other purposes than only folding. In the typical folding approach, one makes sure that the entire beam is reflected. However, it is also possible to more or less select angles by working with an impinging light beam of which the mean angle of incidence is located close to the critical angle of total internal reflection. By doing this, a first portion of the impinging light beam will be transmitted into air where it is refracted, and a second portion of the impinging light beam will be reflected at the prism-air interface. This actually demonstrates an effect of the use of an optical component making use of refraction and internal reflection: it can be used to control the aperture filling of a system, which e.g. has an important influence on the contrast in e.g. DLP-based projection units.

Recently high-brightness systems have been developed based on digital light processing (DLP) technology. At the heart of a DLP projection display is provided a spatial light modulator (SLM) unit. A spatial light modulator unit comprises at least one spatial light modulator, which is a device that modulates incident light in a spatial pattern corresponding to an electrical or optical input. The incident light may be modulated in its phase, intensity, polarisation, or direction, and the light modulation may be achieved by a variety of materials exhibiting various electro-optic or magneto-optic effects or by materials that modulate light by surface deformation. An SLM consists of a one- or two-dimensional array of light-modulating elements. Silicon technology used in projection data monitors is capable of producing small-sized, two-dimensional light-valve arrays having several hundred thousand to several million light-modulating elements.

Spatial light modulators are either transmissive or reflective. Transmissive devices modulate the light beam as it passes through the unit. Reflective devices modulate the light as it reflects from a mirror inside the unit.

A deformable mirror device (DMD), also called digital mirror device or digital micromirror device, is one embodiment of a reflective SLM, see for example US-5,061,049. It is a semiconductor-based array of fast, reflective digital light switches that precisely control reflection of a light source using, for example, a binary pulse width modulation technique. Combined with image processing, memory, a light source, and optics it forms a DLP system capable of projecting large, bright, seamless, high-contrast colour images. A DMD has a matrix of a plurality of individually electrically deformable or moveable mirror cells. In a first state or position, each mirror cell of the deformable mirror device acts as a plane mirror to reflect the light received to one direction (through a lens towards a projection screen for example), while in a second state or position they project the light received to another direction (away from the projection screen).

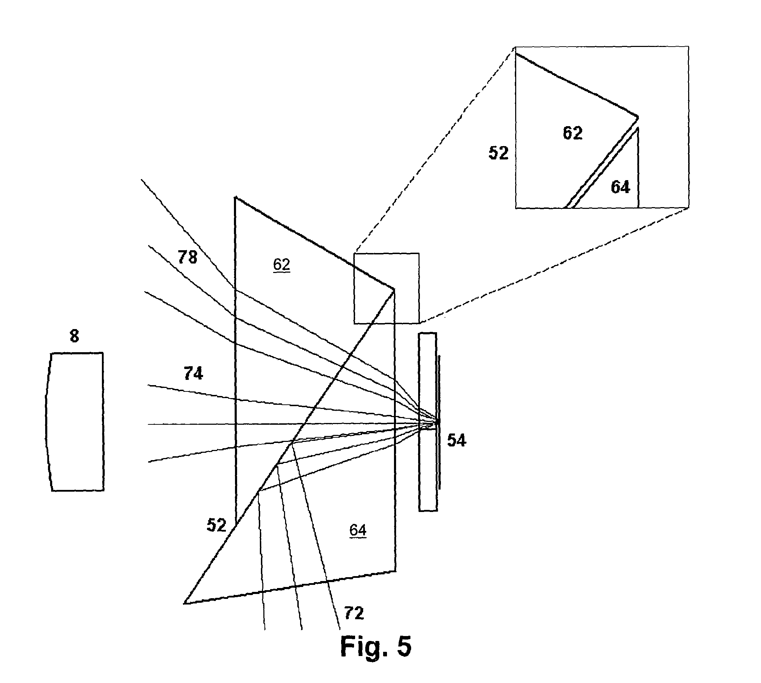

In Fig. 5, a typical example of the use of a reflective SLM in accordance with an embodiment of the present invention is demonstrated. For simplicity, a typical single-chip projector is demonstrated, as this involves only 1 reflective SLM. Other designs using three or more reflective SLM's, e.g. one for each primary colour - red, green and blue, are available as well, and the present invention is not limited to a single-chip set-up. The single chip projector apparatus comprises a white light source 4, a colour splitting device 50, a prismatic unit 52 comprising two glass blocks, and one reflective SLM, which in this case for example is a DMD 54. The colour splitting device can e.g. be a colour-wheel, which rotates at high speed and subsequently transmits red, green, blue and eventually white, synchronised with the steering software which controls the reflective SLM.

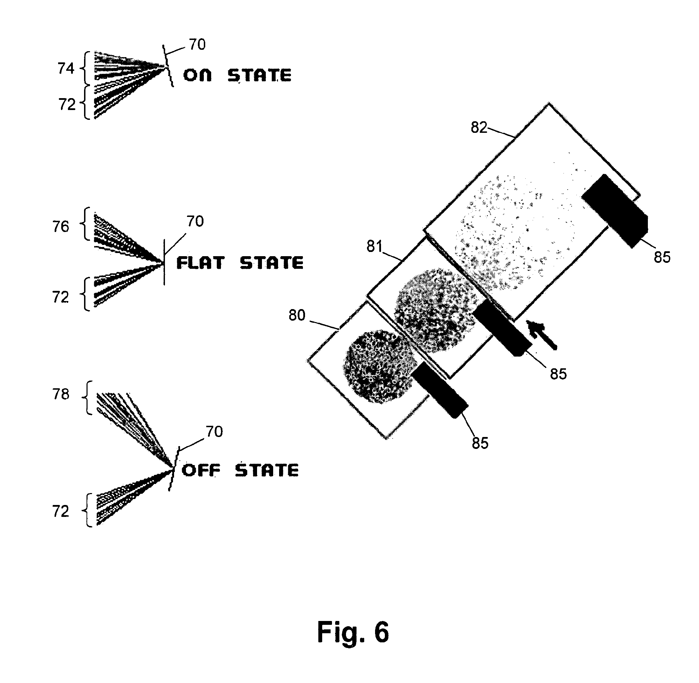

In such an SLM projection system, the light modulator 54 is made of a huge number of small folding mirrors (pixels), that aim the impinging light either towards the display device 10, so as to form bright pixels on the display device 10, or towards an absorbing plate (not represented in the drawings), so as to form dark pixels in the display device 10. In Fig. 6, the principles of a DLP-system are explained. The small lines 70 at the left hand side of the drawing each represent one DMD-mirror. The cone 72 of light rays represent the incoming beam of light, while the cones 74, 76, 78 resp. represent the reflected light rays in case of the ON-, FLAT- and OFF-state of the mirrors 70. The ON-state of the mirror 70 generates a bright pixel on the display device and the OFF-state of the mirror 70 generates a dark pixel on the display device, as discussed above. The FLAT-state of the mirror 70 corresponds to a transition state of the DMDs.

As the SLM device is reflective, it is mechanically difficult to discriminate between the incoming light bundle 72 and the ON-state reflected light 74. As the latter light bundle 74 has to enter the projection lens 8, and the incoming bundle 72 is coming from the lamp 4, some means is needed to split these bundles. As a consequence, the prismatic unit 52 is used. This prism actually consists of 2 prisms 62 and 64. They are separated from each other by a tiny air gap of only a few microns. This tiny air gap is sufficient to allow the total internal reflection to occur. As a consequence, the incoming light bundle 72 is totally reflected towards the DMD 54, whereas the reflected light cones 74, 78 and 76 (not represented in Fig. 6) are not obeying the total internal reflection law. The light is transmitted into the air gap and the second prism 64. The surface of this prism in the direction of the projection lens 8 is parallel to the surface of prism 62 looking at the DMD, in order not to introduce optical aberrations.

On the right hand side of Fig. 6, the reflected signal is shown as can be seen on a detector close to the DMD (in the three positions). As can be seen, the intersection between the 3 states ON 80, FLAT 81, OFF 82 is theoretically zero. The angular distribution of the light cones 74, 76 resp. of the ON-state and the FLAT-state is such that the extreme positions lie close together. Small deviations from the theoretical findings cause light from the dark (flat) pixels to be mixed with light from the bright pixels, which deteriorates the contrast value of the projection device (contrast = light intensity when all pixels are bright /light intensity when all pixels are dark).

In conventional projection devices, those parts of the cone that lie close together are removed from the system (schematically shown as a black rectangle 85 being shifted into the system). By doing this, the contrast is improved. In general, this is physically done by placing a mechanical aperture stop in the system, thus removing light impinging under some angles, as described in the background section.

According to an embodiment of the present invention, removing parts of the cone that are closely together is done by impinging the light under a predetermined angle on an aperture stop means 88 comprising an optical component 89 making use of refraction and internal reflection, such as for example a prism 93, so that a first portion of the impinging light, light impinging under an angle larger than a critical angle, is reflected by the optical component 89, e.g. prism 93 under internal reflection and a second portion of the impinging light, light impinging under an angle smaller than the critical angle, leaves the optical component 89, e.g. prism 93, and is refracted in the surrounding air. The first portion of the light is then sent further into the projection apparatus, and eventually to the mirrors 70, while the second portion of the light is removed from the system, e.g. by sending it to an absorbing plate.

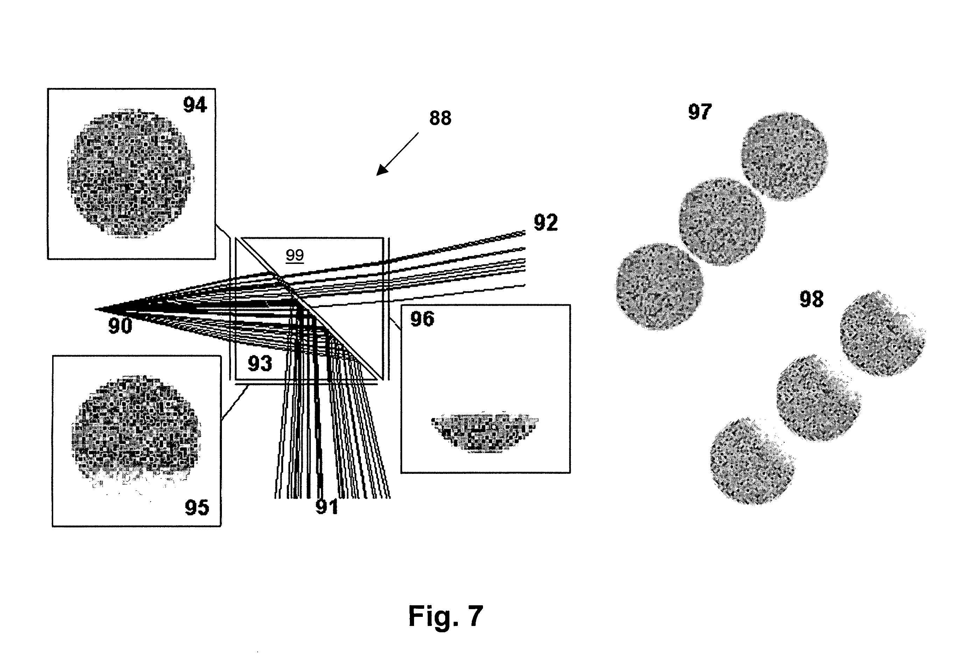

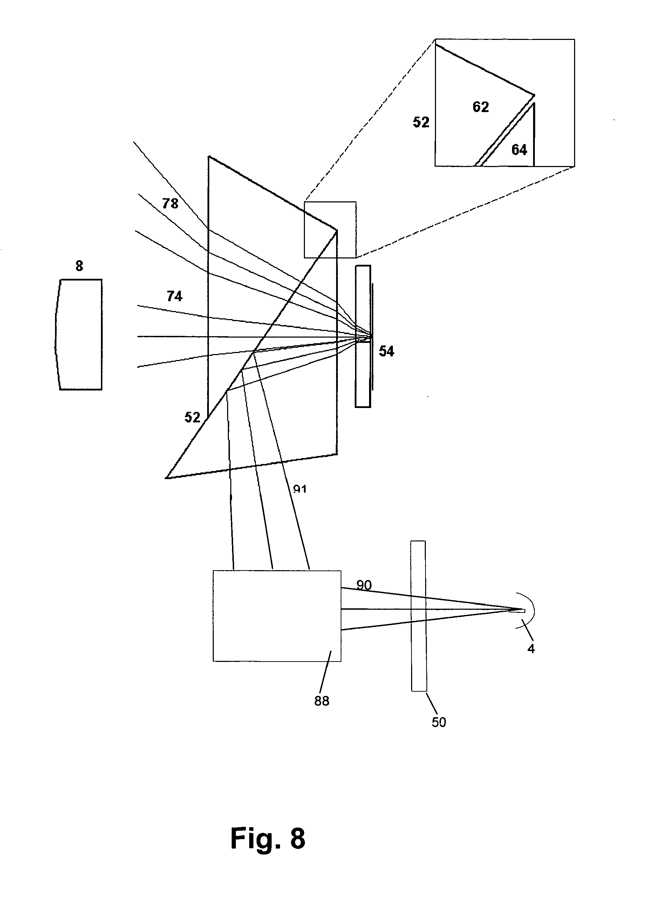

In Fig. 7, this principle is demonstrated, whereas in Fig. 8 a schematic representation of a projection system 100 comprising such an aperture stop means 88 is illustrated. A large number of projection systems use telecentric illumination. This means that the angular distribution of the light cones on the SLM are identical for all positions. We can therefore concentrate on the light bundle emerging from one point where telecentricity occurs (e.g. the exit of the integration rod). This light cone 90 is characterised by a predetermined opening angle β (in the figure, β corresponds to about 15°). The light bundle enters a prism 93 of a certain glass type with a predetermined refractive index (e.g. BK7, with n~1.52). The prism has a predetermined top angle α (in this case, as illustrated in Fig. 7, α = 45°), from which the angle of each light ray hitting the back surface of the prism can be calculated. As can be seen, the bundle is separated into a first bundle 91 which is totally reflected internally. A second part of the initial light bundle does not obey the TIR-law (critical angle = 41.47° in this case) and leaves the prism 93. For clarity purposes only, in Fig. 7 another prism 99 has been added to be able to visualise this second bundle 92 more easily. The angles of the light of the separate light bundles 90, 91 and 92 is witnessed by the respective detectors 94, 95 and 96. The angles are displayed with respect to the normal to the detector. As can be seen on detector 95, a predetermined fraction of the angular distribution of the initial bundle 90 is removed. The signal seen by detector 95 corresponds to the light bundle 91 which is the light that will be guided towards the DMD-device.

On the right hand side of Fig. 7, the angular distribution of the ON-, FLAT- and OFF-state of the light reflected from the DMD (cfr. Fig. 6) have again been represented. The representation indicated with reference numeral 97 represents the way this distribution looks without the TIR-prism being used for removal of light, while the representation indicated with reference numeral 98 represents the result when an optical component making use of refraction and internal reflection, e.g. a prism, is used somewhere in the light path between the lamp 4 and the SLM. As described previously, it is evident that the contrast of the projection apparatus 100 in which the TIR-prism is used for this reason will be higher than when this is not the case.

It is to be understood that although preferred embodiments, specific constructions and configurations, as well as materials, have been discussed herein for devices according to the present invention, various changes or modifications in form and detail may be made without departing from the scope and spirit of this invention.

**Claims**

1. A projection system (100) comprising
   a light source (4) for emitting a bundle of light (90),
   a spatial light modulator (54) for modulating light emitted from the light source (4),
   aperture stop means (88) arranged between the light source (4) and the spatial light modulator (54) for limiting the bundle of light (91) to be incident on the spatial light modulator (54),
   wherein the aperture stop means (88) comprises an optical component (89) making use of refraction and internal reflection.

2. A projection system according to claim 1, wherein the optical component
   (89) is a prism (93).

3. A projection system (100) according to any of the previous claims,
   wherein the aperture stop means (88) is adapted for stopping a fraction of said bundle of light (90), said fraction having a predetermined angular distribution.

4. A projection system (100) according to any of the previous claims, the projection system (100) furthermore comprising further optics determining an aperture plane in the projection system (100), wherein the optical component (89) is positioned outside the aperture plane.

5. A method for improving contrast of a projection device (100) comprising a spatial light modulator (54), the method comprising
   emitting light from a light source (4),
   passing emitted light over a first light path, so as to make it impinge on the spatial light modulator (54),
   furthermore comprising, in the optical path between the light source (4) and the spatial light modulator (54), splitting the emitted light by means of internal reflection and refraction in a first portion impinging on the spatial light modulator (54) and a second portion not impinging on the spatial light modulator (54).

6. A method according to claim 5, wherein splitting the emitted light comprises impinging the emitted light on a prism (93).

7. A method according to any of claims 5 to 6, wherein said first portion comprises light having a first angular distribution and said second portion having a second angular distribution, said first angular distribution and said second angular distribution being different.

8. A method according to any of claims 5 to 7, wherein splitting the emitted light comprises splitting the light outside an aperture plane of optics present in the projection system (100).

## Fig. 1 – PRIOR ART

## Fig. 2 – PRIOR ART

Fig. 3

Fig. 4

Fig. 5

Fig. 6

Fig. 7

**Fig. 8**

**European Patent Office**

**EUROPEAN SEARCH REPORT**

Application Number

EP 05 01 3863

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2003/123163 A1 (PENN STEVEN M) 3 July 2003 (2003-07-03) * page 3, paragraph 30 - page 6, paragraph 50 * | 1-8 | H04N5/74 |
| A | US 2003/147052 A1 (PENN STEVEN M ET AL) 7 August 2003 (2003-08-07) * page 1, paragraph 23 - page 5, paragraph 66 * | 1-8 | |
| A | US 2003/123029 A1 (PENN STEVEN M) 3 July 2003 (2003-07-03) * page 1, paragraph 13 - page 3, paragraph 28 * | 1-8 | |
| A | US 2004/119950 A1 (PENN STEVEN M ET AL) 24 June 2004 (2004-06-24) * page 1, paragraph 15 - page 5, paragraph 47 * | 1-8 | |
| A | US 2003/123162 A1 (PENN STEVEN M) 3 July 2003 (2003-07-03) * page 2, paragraph 16 - page 4, paragraph 30 * | 1-8 | TECHNICAL FIELDS SEARCHED (IPC) H04N G02B |
| A | US 2002/126264 A1 (DEWALD D. SCOTT ET AL) 12 September 2002 (2002-09-12) * page 1, paragraph 17 - page 3, paragraph 32 * | 1-8 | |
| A | US 2003/151834 A1 (PENN STEVEN M) 14 August 2003 (2003-08-14) * page 2, paragraph 26 - page 6, paragraph 56 * | 1-8 | |
| A | US 5 442 414 A (JANSSEN ET AL) 15 August 1995 (1995-08-15) * column 2, line 47 - column 5, line 35 * | 1-8 | |

The present search report has been drawn up for all claims

| Place of search | Date of completion of the search | Examiner |
|---|---|---|
| The Hague | 15 November 2005 | Verschelden, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 01 3863

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2005

| Patent document cited in search report | | Publication date | Patent family member(s) | | Publication date |
|---|---|---|---|---|---|
| US 2003123163 | A1 | 03-07-2003 | NONE | | |
| US 2003147052 | A1 | 07-08-2003 | NONE | | |
| US 2003123029 | A1 | 03-07-2003 | NONE | | |
| US 2004119950 | A1 | 24-06-2004 | EP | 1432245 A1 | 23-06-2004 |
| US 2003123162 | A1 | 03-07-2003 | NONE | | |
| US 2002126264 | A1 | 12-09-2002 | US | 2004057025 A1 | 25-03-2004 |
| US 2003151834 | A1 | 14-08-2003 | NONE | | |
| US 5442414 | A | 15-08-1995 | DE | 69506832 D1 | 04-02-1999 |
| | | | DE | 69506832 T2 | 01-07-1999 |
| | | | EP | 0710423 A1 | 08-05-1996 |
| | | | WO | 9531062 A2 | 16-11-1995 |
| | | | JP | 9500738 T | 21-01-1997 |

EPO FORM P0459

For more details about this annex : see Official Journal of the European Patent Office, No. 12/82